# EUROPEAN PATENT SPECIFICATION

(11) **EP 4 366 000 B1**
(45) Date of publication and mention of the grant of the patent: **25.06.2025**
(21) Application number: 23206922.9
(22) Date of filing: 31.10.2023
(51) Int. Cl.: H01M 4/62, H01M 4/131, H01M 4/1391, H01M 4/505, H01M 4/525, H01M 10/0525, H01M 4/02

(54) **ELECTROCHEMICAL APPARATUS AND ELECTRONIC APPARATUS**
ELEKTROCHEMISCHE VORRICHTUNG UND ELEKTRONISCHE VORRICHTUNG
APPAREIL ÉLECTROCHIMIQUE ET APPAREIL ÉLECTRONIQUE

(30) Priority: 01.11.2022 CN 202211353829
(43) Date of publication of application: 08.05.2024
(73) Proprietor: Ningde Amperex Technology Ltd., Ningde City, Fujian 352100 (CN)
(72) Inventor: CAI, Xiaohu, Ningde City, Fujian Province, People s Republic of China, 352100 (CN)
(74) Representative: Icosa

(56) References cited:
- US-A1- 2015 270 552
- US-A1- 2017 365 858

## Description

### FIELD

This application relates to the field of electrochemical apparatus technologies, and specifically, to an electrochemical apparatus and an electronic apparatus.

### BACKGROUND

An electrochemical apparatus is an energy storage apparatus capable of storing and releasing electrical energy. As a representative, batteries have been widely used in various fields such as consumer electronic devices and electric transportation tools due to the advantages of high energy density, rechargeability, desirable cycle life, and the like. US 2017/365858 A1 discloses examples of such batteries.

With the increasing demand for electrochemical apparatuses in various fields, increasingly high requirements are imposed on energy density, cycling performance, and the like of the electrochemical apparatuses.

However, in the related art, the cycling performance of electrochemical apparatuses deteriorates in high-temperature environments and consequently affects the service life thereof.

### SUMMARY

This application provides an electrochemical apparatus and an electronic apparatus. Such electrochemical apparatus has good cycling performance in high-temperature environments and therefore has a long service life.

According to a first aspect, an embodiment of this application provides an electrochemical apparatus including a positive electrode plate. The positive electrode plate includes a positive electrode current collector and a positive electrode active material layer disposed on a surface of the positive electrode current collector. The positive electrode active material layer includes a positive electrode active material and a conductive agent, the conductive agent containing secondary particles, where a total sectional area S₀ of the secondary particles and a sectional area S₁ of the positive electrode active material layer satisfy 0<So/Si≤0.1; diameter D₀ of the secondary particles satisfies 0 µm<D₀≤18 µm; and percentages by number of secondary particles with the diameter D₀ within different ranges in a total number of secondary particles further satisfy:
(i) a percentage by number η1 of the secondary particles with the diameter D₀ satisfying 0 µm<D₀≤3 µm in the secondary particles satisfies 30%≤η1≤50%;
(ii) a percentage by number η₂ of the secondary particles with the diameter D₀ satisfying 3 µm<D₀≤10 µm in the secondary particles satisfies 30%≤η₂≤50%; and
(iii) a percentage by number η₃ of the secondary particles with the diameter D₀ satisfying 10 µm<D₀≤18 µm in the secondary particles satisfies 0%≤η₃≤20%.

In the electrochemical apparatus provided in this embodiment of this application, the conductive agent contains secondary particles, where the total sectional area S₀ of the secondary particles and the sectional area S₁ of the positive electrode active material layer satisfy the foregoing relationship, the diameter D₀ of the secondary particles satisfies 0 µm<D₀≤18 µm, and the percentage by number of secondary particles with the diameter D₀ within each range in the secondary particles satisfies the foregoing relationships. This can reduce agglomeration of the conductive agent to facilitate construction of a good conductive network structure in the positive electrode active material. In addition, with the conductive agent, a good conductive network structure can be formed in the positive electrode active material, and the conductive network structure helps to improve electron conduction capability of the positive electrode plate in high-temperature environments, thereby helping to reduce the resistance of the positive electrode plate. Therefore, the electrochemical apparatus provided in this embodiment of this application has good cycling performance in high-temperature environments and therefore has a long service life.

In any one of the foregoing embodiments according to the first aspect of this application, a total sectional area S₀ of the secondary particles and a sectional area S₁ of the positive electrode active material layer further satisfy 0.04≤S₀/S₁≤0.08.

In any one of the foregoing embodiments according to the first aspect of this application, particle size distribution of the positive electrode active material satisfies 0.15≤Dᵥ10/Dᵥ50≤0.9.

In any one of the foregoing embodiments according to the first aspect of this application, particle size distribution of the positive electrode active material satisfies 0.38≤Dᵥ10/Dᵥ50≤0.78.

In any one of the foregoing embodiments according to the first aspect of this application, particle size distribution of the positive electrode active material satisfies 0.59≤Dᵥ10/Dᵥ50≤0.64.

In any one of the foregoing embodiments according to the first aspect of this application, the positive electrode active material includes a nickel-cobalt-manganese ternary material.

In any one of the foregoing embodiments according to the first aspect of this application, the percentage of the number of moles of nickel to the total number of moles of nickel, cobalt, and manganese in the nickel-cobalt-manganese ternary material is greater than or equal to 60%.

In any one of the foregoing embodiments according to the first aspect of this application, in a section along a thickness direction of the positive electrode active material layer, the number density ρ of the secondary particles per unit area satisfies p≤20,000/cm².

In any one of the foregoing embodiments according to the first aspect of this application, the secondary particle is formed by agglomeration of a plurality of primary particles, where the primary particles include at least one of granular conductive carbon or carbon nanotubes.

In any one of the foregoing embodiments according to the first aspect of this application, length L of the carbon nanotubes and diameter D₁ of the carbon nanotubes satisfy the following characteristics:
(i) the length L of the carbon nanotubes satisfies 0.1 µm≤L≤6 µm;
(ii) the diameter D₁ of the carbon nanotubes satisfies 4 nm≤D₁≤20 nm; and
(iii) a length-to-diameter ratio L/D₁ of the carbon nanotubes satisfies 100≤L/D₁≤300.

In any one of the foregoing embodiments according to the first aspect of this application, the positive electrode active material layer further includes a binder, and the binder satisfies at least one of the following characteristics:
(I) the binder has a corresponding Fourier transform infrared spectrum characteristic peak: 1654 cm⁻¹;
(II) a weight-average molecular weight Mw of the binder satisfies: 900,000≤Mw≤1,200,000;
(III) the weight-average molecular weight Mw and a number-average molecular weight Mn of the binder satisfy: 1.8≤Mw/Mn≤2.4;
(IV) a volume expansion ratio of the binder is within a range of 15% to 35% in terms of volume percentage

In any one of the foregoing embodiments according to the first aspect of this application,the binder has a molecular formula (A):

(VDF)m(TFE)n(HFP)r(PVP)x (A)

where in the formula (A), VDF represents vinylidene fluoride, which is a structural unit of Polyvinylidene fluoride; TFE represents tetrafluoroethylene, which is a structural unit of Ploytetrafluoroethylene; HFP represents hexafluoropropylene, which is a structural unit of Ployhexafluoropropylene; PVP represents vinylpyrrolidone, which is a structural unit of polyvinyl pyrrolidone; 0.35≤m≤1; 0≤n≤0.4; 0≤r≤0.2; 0≤x≤0.2; and m+n+r+x=1.

According to a second aspect, an embodiment of this application provides an electronic apparatus including the electrochemical apparatus in any one of the foregoing embodiments according to the first aspect.

The foregoing description is merely an overview of the technical solution of this application. For a better understanding of the technical means in this application such that they can be implemented according to the content of the specification, and to make the above and other objectives, features, and advantages of this application more obvious and easier to understand, the following describes specific embodiments of this application.

### BRIEF DESCRIPTION OF DRAWINGS

Persons of ordinary skill in the art can clearly understand various other advantages and benefits by reading the detailed description of some embodiments below. The accompanying drawings are merely intended to illustrate some embodiments and are not construed as a limitation on this application. Moreover, throughout the accompanying drawings, same parts are denoted by same reference signs. In the accompanying drawings:
FIG. 1 is a schematic structural diagram of an electrochemical apparatus according to an embodiment of this application.
FIG. 2 is a schematic structural exploded view of the electrochemical apparatus shown in FIG. 1.
FIG. 3 is a SEM image of a positive electrode plate in an electrochemical apparatus according to an embodiment of this application.

### Description of reference signs:

1. electrochemical apparatus; 11. housing; 12. electrode assembly; and 13. top cover assembly.

### DESCRIPTION OF EMBODIMENTS

The following describes in detail some embodiments of technical solutions of this application with reference to the accompanying drawings. The following embodiments are merely intended for a clearer description of the technical solutions of this application and therefore are used as just examples which do not constitute any limitation on the protection scope of this application.

Unless otherwise defined, all technical and scientific terms used herein shall have the same meanings as commonly understood by those skilled in the art to which this application relates. The terms used herein are intended to merely describe the specific embodiments rather than to limit this application. The terms "include", "comprise", and any other variations thereof in the specification, claims and brief description of drawings of this application are intended to cover non-exclusive inclusions.

In this specification, reference to "embodiment" means that specific features, structures or characteristics described with reference to the embodiment may be incorporated in at least one embodiment of this application. The word "embodiment" appearing in various places in the specification does not necessarily refer to the same embodiment or an independent or alternative embodiment that is exclusive of other embodiments. It is explicitly or implicitly understood by persons skilled in the art that some embodiments described herein may be combined with other embodiments.

In the description of some embodiments of this application, the term "and/or" is only an associative relationship for describing associated objects, indicating that three relationships may be present. For example, A and/or B may indicate the following three cases: presence of only A, presence of both A and B, and presence of only B. In addition, the character "/" in this specification generally indicates an "or" relationship between contextually associated objects.

In the description of some embodiments of this application, it should be noted that, unless otherwise stated, "more than" and "less than" are inclusive of the number itself, and "more types" in "one or more types" and "more" in "one or more" mean more than two types (two).

The appended claims define the subject-matter of the invention.

Before explaining the protection scope provided by some embodiments of this application, it is necessary to first provide a specific description of some problems existing in the related art for a better understanding of some embodiments of this application.

With the development of electrochemical apparatus technologies, the application thereof in various fields has become increasingly widespread. in addition, increasingly high requirements are imposed on energy density, cycling performance, and the like of electrochemical apparatuses.

In the related art, an electrochemical apparatus typically includes a positive electrode plate, a negative electrode plate, and a separator provided between the positive electrode plate and the negative electrode plate, where the positive electrode plate includes a positive electrode current collector and a positive electrode active material layer disposed on a surface of the current collector. To improve electron conduction capability of the positive electrode plate, typically a conductive agent is added into the positive electrode plate active material layer, the conductive agent is mixed with a positive electrode active material, a binder, and the like to form a positive electrode slurry, and then the slurry is applied onto the surface of the positive electrode current collector to form the positive electrode active material layer. However, agglomeration of the conductive agent in the positive electrode slurry increases resistance of the positive electrode plate, resulting in degradation of the cycling performance of the electrochemical apparatus in high-temperature environments.

In view of this, an embodiment of this application provides an electrochemical apparatus and an electronic apparatus. Such electrochemical apparatus has good cycling performance in high-temperature environments.

In this application, the electrochemical apparatus includes any apparatus in which an electrochemical reaction takes place. Specific examples of the apparatus include all types of primary batteries, secondary batteries, fuel batteries, solar batteries, or capacitors. For example, the electrochemical apparatus is a lithium secondary battery, where the lithium secondary battery may include a lithium metal secondary battery, a lithium-ion secondary battery, a lithium polymer secondary battery, or a lithium-ion polymer secondary battery.

### Electrochemical apparatus

An embodiment of this application provides an electrochemical apparatus including a positive electrode plate. The positive electrode plate includes a positive electrode current collector and a positive electrode active material layer disposed on a surface of the positive electrode current collector. The positive electrode active material layer includes a positive electrode active material and a conductive agent, the conductive agent containing secondary particles, where a total sectional area S₀ of the secondary particles and a sectional area S₁ of the positive electrode active material layer satisfy 0<S₀/S₁≤0.1; diameter D₀ of the secondary particles satisfies 0 µm<D₀≤18 µm; and percentages by number of the secondary particles with the diameter D₀ within different ranges in a total number of secondary particles further satisfy:
(i) a percentage by number η1 of the secondary particles with the diameter D₀ satisfying 0 µm<D₀≤3 µm in the secondary particles satisfies 30%≤η1≤50%;
(ii) a percentage by number η₂ of the secondary particles with the diameter D₀ satisfying 3 µm<D₀≤10 µm in the secondary particles satisfies 30%≤η₂≤50%; and
(iii) a percentage by number η₃ of the secondary particles with the diameter D₀ satisfying 10 µm<D₀≤18 µm in the secondary particles satisfies 0%≤η₃≤20%.

In this embodiment of this application, the positive electrode plate may be provided with the positive electrode active material layer on one surface of the positive electrode current collector or on both surfaces of the positive electrode current collector. This is not particularly limited in this embodiment of this application.

In this application, the secondary particle contained in the conductive agent is formed by agglomeration of a plurality of primary particles.

In the electrochemical apparatus provided in this embodiment of this application, the conductive agent contains secondary particles, where the total sectional area S₀ of the secondary particles and the sectional area S₁ of the positive electrode active material layer satisfy the foregoing relationship, the diameter D₀ of the secondary particles satisfies 0 µm<D₀≤18 µm, and the percentage by number of the secondary particles with the diameter D₀ within each range in the secondary particles further satisfies the foregoing relationships. This can reduce agglomeration of the conductive agent to facilitate construction of a good conductive network structure in the positive electrode active material. In addition, with the conductive agent, a good conductive network structure can be formed in the positive electrode active material, and the conductive network structure helps to improve electron conduction capability of the positive electrode plate in high-temperature environments, thereby helping to reduce the resistance of the positive electrode plate. Therefore, the electrochemical apparatus provided in this embodiment of this application has good cycling performance in high-temperature environments and therefore has a long service life.

The positive electrode current collector is not particularly limited in this embodiment of this application. The positive electrode current collector may be a metal foil or a porous metal plate, for example, a foil or porous plate made of a metal such as aluminum, copper, nickel, titanium, iron, or alloy thereof. In some embodiments of this application, the positive electrode current collector is an aluminum foil.

In some embodiments of this application, a total sectional area S₀ of the secondary particles and a sectional area S₁ of the positive electrode active material layer further satisfy 0.04≤S₀/S₁≤0.08.

In the foregoing embodiments, the total sectional area S₀ of the secondary particles and the sectional area S₁ of the positive electrode active material layer are helpful for reducing the resistance of the positive electrode plate, so as to reduce the swelling rate of the positive electrode plate and improve the cycling performance of the electrochemical apparatus.

In some embodiments of this application, particle size distribution of the positive electrode active material satisfies: 0.15≤Dᵥ10/Dᵥ50≤0.9.

In some embodiments of this application, particle size distribution of the positive electrode active material satisfies 0.38≤Dᵥ10/Dᵥ50≤0.78.

In some embodiments of this application, particle size distribution of the positive electrode active material satisfies 0.59≤Dᵥ10/Dᵥ50≤0.64.

Dᵥ10 refers to a particle size at which the cumulative volume distribution percentage of the positive electrode active material reaches 10%.

Dv50 refers to a particle size at which the cumulative volume distribution percentage of the positive electrode active material reaches 50%.

In the foregoing embodiments, the particle size by volume of the positive electrode active material satisfies the foregoing relationship, helping to increase a compacted density of the positive electrode active material layer to allow for formation of a good conductive network structure in the positive electrode active material, thereby making the electrochemical apparatus achieve a high energy density and good charging and discharging rate performance.

In some examples, a particle size by volume Dᵥ10 of the positive electrode active material may be 2 µm, 3 µm, 4 µm, 5 µm, 6 µm, or 7 µm. The particle size by volume Dᵥ50 of the positive electrode active material may be 4.5 µm, 5 µm, 5.5 µm, 6 µm, 6.5 µm, 7 µm, 7.5 µm, 8 µm, 8.5 µm, 9 µm, 9.5 µm, 10 µm, 10.5 µm, 11 µm, 11.5 µm, or 12 µm. The particle size by volume Dᵥ99 of the positive electrode active material may be 10 µm, 11 µm, 12 µm, 13 µm, 14 µm, 15 µm, 16 µm, 17 µm, 18 µm, 19 µm, or 20 µm. A ratio of the particle size by volume Dᵥ10 to the particle size by volume Dᵥ50 of the positive electrode active material may be 0.15, 0.2, 0.25, 0.3, 0.35, 0.4, 0.45, 0.5, 0.55, 0.6, 0.65, 0.7, 0.75, 0.8, 0.85, or 0.9.

In some embodiments of this application, the positive electrode active material includes a nickel-cobalt-manganese ternary material. This can increase the capacity of the electrochemical apparatus and accordingly increase the energy density of the electrochemical apparatus.

In some embodiments of this application, the nickel-cobalt-manganese ternary material may be a ternary structural material such as NCM811, NCM622, NCM613, NCM523, or NCM111.

In NCM811, N represents nickel, C represents cobalt, M represents manganese, and 811 represents a molar ratio of element nickel, element cobalt, and element manganese in the ternary material. To be specific, the molar ratio of element nickel:element cobalt:element manganese is 8:1:1, and in this case, the percentage of the number of moles of nickel to the total number of moles of nickel, cobalt, and manganese in the nickel-cobalt-manganese ternary material is 80%. In NCM523, a molar ratio of element nickel:element cobalt:element manganese is 5:2:3, and the percentage of the number of moles of nickel to the total number of moles of nickel, cobalt, and manganese in the nickel-cobalt-manganese ternary material is 50%.

In some embodiments of this application, the percentage of the number of moles of nickel to the total number of moles of nickel, cobalt, and manganese in the nickel-cobalt-manganese ternary material is greater than or equal to 60%. This makes the electrochemical apparatus achieve a high energy density.

In some other embodiments of this application, the positive electrode active material may further include an olivine-structured material such as lithium manganese iron phosphate, lithium iron phosphate, or lithium manganese phosphate, as well as at least one of a lithium cobaltate material, a lithium manganate material, or other metal oxides allowing for intercalation and deintercalation of lithium.

In some embodiments of this application, in a section along a thickness direction of the positive electrode active material layer, the number density ρ of the secondary particles per unit area satisfies p≤20,000/cm².

In the foregoing embodiments, the number density ρ of the secondary particles per unit area being within the appropriate range mentioned above contributes to uniform dispersion of the conductive agent on the surface of the positive electrode active material, such that the positive electrode plate has a better conductive network structure, reducing the resistance of the electrochemical apparatus, thereby improving the cycling performance of the electrochemical apparatus in high-temperature environments.

In some examples, the number density ρ of the secondary particles per unit area may be 1,000/cm², 1,500/cm², 2,000/cm², 2,500/cm², 3,000/cm², 3,500/cm², 4,000/cm², 4,500/cm², 5,000/cm², 5,500/cm², 6,000/cm², 6,500/cm², 7,000/cm², 7,500/cm², 8,000/cm², 8,500/cm², 9,000/cm², 9,500/cm², or 10,000/cm².

In some embodiments of this application, the secondary particle is formed by agglomeration of a plurality of primary particles, where the primary particles include at least one of granular conductive carbon or carbon nanotubes.

It can be understood that the secondary particle may be formed by agglomeration of a plurality of granular conductive carbon, by agglomeration of a plurality of carbon nanotubes, or by agglomeration of granular conductive carbon and carbon nanotubes.

In some embodiments of this application, length L of the carbon nanotubes and diameter D₁ of the carbon nanotubes satisfy the following characteristics:
(i) the length L of the carbon nanotubes satisfies 0.1 µm≤L≤6 µm;
(ii) the diameter D₁ of the carbon nanotubes satisfies 4 nm≤D₁≤20 nm; and
(iii) a length-to-diameter ratio L/D₁ of the carbon nanotubes satisfies 100≤L/D₁≤300.

In the foregoing embodiments, the carbon nanotubes satisfying the foregoing relationships can not only contribute to construction of a conductive network structure in the positive electrode active material but also allow broken positive electrode active material to be connected to further construct a better conductive network structure, thereby improving the cycling performance of the electrochemical apparatus in high-temperature environments.

In some examples, the length L of the carbon nanotubes may be 0.1 µm, 0.2 µm, 0.3 µm, 0.4 µm, 0.5 µm, 0.6 µm, 0.7 µm, 0.8 µm, 0.9 µm, 1 µm, 1.5 µm, 2 µm, 2.5 µm, 3 µm, 3.5 µm, 4 µm, 4.5 µm, 5 µm, 5.5 µm, or 6 µm. The diameter D₁ of the carbon nanotubes may be 4 nm, 5 nm, 6 nm, 7 nm, 8 nm, 9 nm, 10 nm, 11 nm, 12 nm, 13 nm, 14 nm, 15 nm, 16 nm, 17 nm, 18 nm, 19 nm, or 20 nm. The length-to-diameter ratio L/D₁ of the carbon nanotubes may be 100, 110, 120, 130, 140, 150, 160, 170, 180, 190, 200, 210, 220, 230, 240, 250, 260, 270, 280, 290, or 300.

In some other examples, the granular conductive carbon may be carbon black, acetylene black, Ketjen black, or the like.

In some embodiments of this application, the positive electrode active material layer further includes a binder, and the binder satisfies at least one of the following characteristics:
(I) the binder has a corresponding Fourier transform infrared spectrum characteristic peak: 1654 cm⁻¹;
(II) a weight-average molecular weight Mw of the binder satisfies: 900,000≤Mw≤1,200,000;
(III) the weight-average molecular weight Mw and a number-average molecular weight Mn of the binder satisfy: 1.8≤Mw/Mn≤2.4;
(IV) a volume expansion ratio of the binder is within a range of 15% to 35% in terms of volume percentage

In the foregoing embodiments, the binder satisfies at least one of (I), (II), (III) or (IV). This can contribute to dispersion of slurry compositions such as the conductive agent and the positive electrode active material so as to inhibit formation of gel, thereby reducing occurrence of abnormal agglomeration of the compositions. Especially in a high-nickel positive electrode active material system, formation of gel in the slurry can be further inhibited, and the electron conduction capability of the positive electrode plate can be improved, thereby further improving the cycling performance of the electrochemical apparatus in high-temperature environments.

In some embodiments of this application, the binder has a molecular formula (A):

(VDF)m(TFE)n(HFP)r(PVP)x (A)

where in the formula (A), VDF represents a structural unit of vinylidene fluoride; TFE represents a structural unit of tetrafluoroethylene; HFP represents a structural unit of hexafluoropropylene; PVP represents a structural unit of polyvinyl pyrrolidone; 0.35≤m≤1; 0≤n≤0.4; 0≤r≤0.2; 0≤x≤0.2; and m+n+r+x=1.

In the foregoing embodiments, when x=0, the binder having the molecular formula (A) can be prepared using the following preparation method:
a reactor with a volume of 25 L is vacuumized, and nitrogen is pumped out and replaced with oxygen; then, 18 kg of deionized water, 200 g of a sodium perfluorooctanoate solution with a mass concentration of 5%, and 80 g of paraffin (with a melting point of 60°C) are first added into the reactor; a stirring speed is regulated to 130 rpm/min; the reactor is heated to 85°C;
a vinylidene fluoride monomer, a tetrafluoroethylene monomer, and a hexafluoropropylene monomer are proportionally added into the reactor with a pressure of 5.0 MPa, and then 1.15 g of an initiator dioctyl dicarbonate peroxide is added for a polymerization reaction;
subsequently, the vinylidene fluoride monomer is supplemented, the pressure of the reactor is maintained at 5.0 MPa; every 10 min, 0.01 g of the initiator is added in batches, and at conversion rates of 20%, 40%, 60%, and 80%, four batches of a chain transfer agent HFC-4310 are added in increments of 5 g each time; and a total of 5 kg of the vinylidene fluoride monomer is added throughout the reaction; and
after the pressure in the reactor drops to 4.0 MPa and the reaction is performed for 140 min, gas is exhausted, and a resulting material is collected and then centrifuged, washed, and dried to obtain a binder having the formula (A), where the binder has a weight-average molecular weight of 900,000 to 1,200,000 and a molecular weight distribution of Mw/Mn=1.8-2.4.

In some embodiments of this application, an adhesion force F of the positive electrode active material layer satisfies 10 N/m≤F≤80 N/m.

In the foregoing embodiments, the binder can help the positive electrode active material layer to have an adhesion force F satisfying the foregoing relationship. This helps the positive electrode plate to meet the requirements on adhesion force during processing and also can slow down an increase in the swelling rate of the positive electrode plate during cycling, allowing the electrochemical apparatus to have better cycling performance in high-temperature environments.

The adhesion force mentioned in the foregoing embodiments can be tested using the following test method:
(1) a dried positive electrode plate is cut with a knife to obtain a sample with a width of 30 mm and a length of 100 mm to 160 mm;
(2) a special double-sided tape, with a width of 20 mm and a length of 90 mm to 150 mm, is pasted to a steel plate;
(3) the sample is pasted to the double-sided tape, and is attached to the double-sided tape, with a test surface facing downward;
(4) a paper tape that is as wide as the sample and 80 mm longer than the sample is inserted below the sample and fastened using a crepe paper tape to obtain a test sample;
(5) a tensile machine (of which the brand is Sunstest and the model is Instron 3365) is powered on, then an indicator light is lighted, and a limiting block is adjusted to an appropriate position;
(6) the test sample is fixed to a test bench; the paper tape is folded upwards, fixed using a fixture, and pulled at a speed of 10 mm/min within a test range of 0 mm to 40 mm; the paper tape starts to be pulled at 90° to pull the positive electrode active material layer attached to a surface of the double-sided tape away from the positive electrode current collector until the test is ended; and
(7) test data is stored according to software prompt so that data about the adhesion between the positive electrode active material layer and the positive electrode current collector is obtained; and after the test is ended, the sample is taken out, and instruments are turned off.

The positive electrode plate in this application can be prepared according to conventional methods in the art. For example, an active material, a conductive agent, and a binder are dispersed in and mixed with N-methylpyrrolidone (NMP) to form a uniform positive electrode slurry; and the positive electrode slurry is applied onto the positive electrode current collector, and then dried, cold-pressed, cut, slit, and dried again to obtain a positive electrode plate.

In some embodiments of this application, the electrochemical apparatus further includes a negative electrode plate, a separator, and an electrolyte.

The negative electrode plate includes a negative electrode current collector and a negative electrode active material layer disposed on at least one surface of the negative electrode current collector. It can be understood that the negative electrode plate may be provided with the negative electrode active material layer on one surface of the negative electrode current collector or on both surfaces of the negative electrode current collector. This is not particularly limited in these embodiments of this application.

The negative electrode current collector may be a metal foil or a porous metal plate, for example, a foil or porous plate made of a metal such as copper, nickel, titanium, iron, or alloy thereof. In some embodiments of this application, the negative electrode current collector is a copper foil.

A type of the negative electrode active material in the negative electrode active material layer is not limited in this application and can be selected as required. For example, other negative electrode active materials include but are not limited to natural graphite, artificial graphite, mesocarbon microbeads (MCMB), hard carbon, soft carbon, silicon, a silicon-carbon composite, SiO, Li-Sn alloy, Li-Sn-O alloy, Sn, SnO, SnO₂, spinel-structure Li₄Ti₅O₁₂, or Li-Al alloy.

In some embodiments of this application, the negative electrode active material layer further includes a binder. The binder may be at least one selected from styrene-butadiene rubber (SBR), polyacrylic acid (PAA), polyacrylic acid sodium (PAAS), polyacrylamide (PAM), polyvinyl alcohol (PVA), sodium alginate (SA), polymethacrylic acid (PMAA), or carboxymethyl chitosan (CMCS).

In some embodiments of this application, the negative electrode active material layer further includes a conductive agent. The conductive agent may be at least one selected from superconducting carbon, acetylene black, carbon black, Ketjen black, carbon dots, carbon nanotubes, graphene, or carbon nanofiber.

In some embodiments of this application, the negative electrode active material layer may further include other additives such as a thickener (for example, sodium carboxymethyl cellulose (CMC-Na)).

However, this application is not limited to the foregoing materials. Other well-known materials can alternatively be used for the negative electrode plate in this application, serving as negative electrode active materials, conductive agents, binders, and thickeners.

The negative electrode plate in this application can be prepared according to conventional methods in the art. For example, a negative electrode active material, a conductive agent, a binder, and a thickener are dispersed in a solvent that may be N-methylpyrrolidone (NMP) or deionized water, to form a uniform negative electrode slurry; the negative electrode slurry is applied onto the negative electrode current collector, and then dried and cold-pressed to obtain a negative electrode active material layer; and then a negative electrode plate is obtained.

The separator is provided between the positive electrode plate and the negative electrode plate to mainly prevent short circuit between the positive and negative electrodes and to allow active ions to pass through. The separator is not limited to any particular type in this application, and may be any well-known porous separator with good chemical stability and mechanical stability.

In some embodiments of this application, a material of the separator may be one or more selected from glass fiber, non-woven fabric, polyethylene, polypropylene, and polyvinylidene fluoride, but is not limited to these materials. Optionally, the separator may be made of polyethylene and/or polypropylene. The separator may be a single-layer film or a multi-layer composite film. When the separator is a multi-layer composite film, all layers may be made of same or different materials. In some other embodiments of this application, the separator may also be provided with a ceramic coating or a metal oxide coating.

In the electrochemical apparatus, the electrolyte is a carrier for ion transport and capable of transporting ions between the positive electrode plate and the negative electrode plate, ensuring the advantages such as good cycling performance of the electrochemical apparatus.

In some implementations of this application, the electrolyte includes an organic solvent, a lithium salt, and an optional additive. Types of the organic solvent, the lithium salt, and the additive are all not specifically limited and can be selected as required.

In some embodiments of this application, the lithium salt includes but is not limited to at least one of lithium hexafluorophosphate (LiPF₆), lithium tetrafluoroborate (LiBF₄), lithium perchlorate (LiClO₄), lithium bis(fluorosulfonyl)imide (LiFSI), lithium bistrifluoromethanesulfonimide (LiTFSI), lithium trifluoromethanesulfonate (LiTFS), lithium difluoro(oxalato)borate (LiDFOB), lithium dioxalate borate (LiBOB), lithium difluorophosphate (LiPO₂F₂), lithium difluoro(dioxalato)phosphate (LiDFOP), or lithium tetrafluoro oxalato phosphate (LiTFOP). One of the foregoing lithium salts may be used alone, or two or more thereof may be used together.

In some embodiments of this application, the organic solvent includes but is not limited to at least one of ethylene carbonate (EC), propylene carbonate (PC), ethyl methyl carbonate (EMC), diethyl carbonate (DEC), dimethyl carbonate (DMC), dipropyl carbonate (DPC), methyl propyl carbonate (MPC), ethyl propyl carbonate (EPC), butylene carbonate (BC), fluoroethylene carbonate (FEC), methylmethyl formate (MF), methyl acetate (MA), ethyl acetate (EA), propyl acetate (PA), methyl propionate (MP), ethyl propionate (EP), propyl propionate (PP), methyl butyrate (MB), ethyl butyrate (EB), 1,4-butyrolactone (GBL), sulfolane (SF), methyl sulfonyl methane (MSM), ethyl methyl sulfone (EMS), or ethyl sulfonyl ethane (ESE). One of the foregoing organic solvents may be used alone, or two or more thereof may be used together.

In some embodiments of this application, the additive may include a negative electrode film-forming additive or a positive electrode film-forming additive or may include an additive capable of improving some performance of the battery, for example, an additive for improving overcharge performance of the battery, or an additive for improving high-temperature performance or low-temperature performance of the battery.

In some examples, the additive includes but is not limited to at least one of fluoroethylene carbonate (FEC), vinylene carbonate (VC), vinyl ethylene carbonate (VEC), diethyl dithiophosphate (DTD), acrylic acid sulfate, ethylene sulfite (ES), 1,3-propyl sultone (PS), 1,3-propane sultone (PST), sulfonate cyclic quaternary ammonium salt, succinic anhydride, succinonitrile (SN), adiponitrile (ADN), tri(methylsilyl) phosphate (TMSP), or tri(methylsilyl) borate (TMSB).

The electrolyte can be prepared using conventional methods in the art. For example, the electrolyte may be prepared by uniformly mixing the organic solvent, the lithium salt, and the optional additive. An order of adding the materials is not particularly limited. For example, the lithium and the optional additive are added into the organic solvent and the resulting mixture is well mixed to obtain an electrolyte. Alternatively, the lithium salt is first added into the organic solvent, and then the optional additive is added into the organic solvent and the resulting mixture is well mixed to obtain an electrolyte.

In some embodiments of this application, the positive electrode plate, the negative electrode plate, and the separator may be made into an electrode assembly through winding or lamination.

The electrochemical apparatus in some embodiments of this application further includes an outer package for packaging the electrode assembly and the electrolyte. In some embodiments of this application, the outer package may be a hard shell, for example, a hard plastic shell, an aluminum shell, or a steel shell. Alternatively, the outer package may be a soft pack, for example, a bag-type soft pack. The soft pack may be made of plastic, for example, at least one of polypropylene (PP), polybutylene terephthalate (PBT), or polybutylene succinate (PBS).

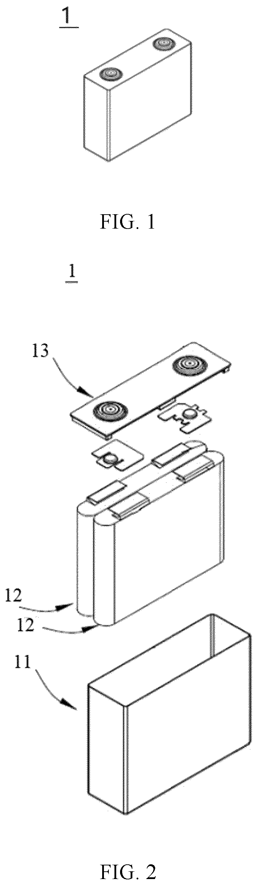

The electrochemical apparatus is not limited to any particular shape and may be cylindrical, rectangular, or of any other shape. For example, FIG. 1 shows an electrochemical apparatus 1 of a rectangular structure as an example.

In some embodiments of this application, referring to FIG. 2, the outer package may include a housing 11 and a top cover assembly 13. The housing 11 includes a base plate and side plates connected to the base plate, and the base plate and the side plates enclose an accommodating cavity. The housing 11 has an opening communicating with the accommodating cavity, and the top cover assembly 13 can cover the opening to close the accommodating cavity. The positive electrode plate, the negative electrode plate, and the separator may be made into an electrode assembly 12 through winding or lamination. The electrode assembly 12 is packaged in the accommodating cavity. The electrochemical apparatus 1 may include one or more electrode assemblies 12, and persons skilled in the art may make choices according to actual requirements.

After being injected into the housing, the electrolyte is subjected to processes such as vacuum packaging, standing, formation, and vacuum formation to obtain an electrochemical apparatus.

### Electronic apparatus

According to a second aspect, this application provides an electronic apparatus including the electrochemical apparatus according to the first aspect of this application.

The electronic apparatus is not particularly limited in some embodiments of this application and may be any known electronic apparatus used in the prior art. In some embodiments of this application, the electronic apparatus may include but is not limited to a notebook computer, a pen-input computer, a mobile computer, an electronic book player, a portable telephone, a portable fax machine, a portable copier, a portable printer, a stereo headset, a video recorder, a liquid crystal television, a portable cleaner, a portable CD player, a mini-disc, a transceiver, an electronic notepad, a calculator, a memory card, a portable recorder, a radio, a standby power source, a motor, an automobile, a motorcycle, a motor bicycle, a bicycle, a lighting appliance, a toy, a game console, a timepiece, an electric tool, a flash lamp, a camera, a large household battery, or a lithium-ion capacitor.

Content disclosed in this application is described in detail in the following examples. These examples are merely for illustrative purposes because various modifications and changes made without departing from the scope of the content disclosed in this application are apparent to persons skilled in the art. All reagents used in Examples are commercially available or synthesized in a conventional manner, and can be used directly without further processing, and all instruments used in Examples are commercially available.

For ease of description, the lithium-ion secondary battery is used as an example of the electrochemical apparatus for detailed description of the electrochemical apparatus and manufacturing method thereof in the following examples.

### Example 1

### Preparation of positive electrode plate

A conductive agent (CNT-1) and a binder Y1 were added into NMP, stirred and mixed to prepare a conductive glue solution (with a solid content of 7%);
a positive electrode active material lithium nickel cobalt manganate 811 (Ni_{0.8}Co_{0.1}Mn_{0.1}) was added into the conductive glue solution and stirred under the action of a vacuum stirrer until the system was uniform to obtain a positive electrode slurry with a solid content of about 75%, where a mass ratio of the NCM, conductive carbon tubes, and the binder Y1 was 97.5:1:1.5, Dᵥ50 of the positive electrode active material NCM811 (lithium nickel cobalt manganate) was 9.6 µm, a structural formula of the binder Y1 was shown in Table 4, CNT-1 was shown in Table 6, and a length-to-diameter ratio L/D₁ of CNT-1 was 205; and
the positive electrode slurry was applied onto an aluminum foil with a thickness of 10 µm, followed by drying, cold pressing, cutting, and tab welding, to obtain a positive electrode plate.

### Preparation of negative electrode plate

Artificial graphite, styrene-butadiene rubber, and sodium carboxymethyl cellulose at a mass ratio of 96:2:2 were mixed with deionized water and an additive, and a resulting mixture was well stirred to obtain a negative electrode slurry; and
the negative electrode slurry was applied onto a copper foil with a thickness of 12 µm, followed by drying, cold pressing, cutting, and tab welding, to obtain a negative electrode plate.

### Preparation of electrolyte

In a dry argon environment, EC, PC, and DEC (at a weight ratio of 1:1:1) were mixed, then LiPF₆ was added, and the resulting mixture was well mixed to form a base electrolyte, where the concentration of LiPF₆ was 1.15 mol/L.

### Preparation of separator

A polyethylene (PE) porous polymer film was used as the separator.

### Preparation of lithium-ion secondary battery

The positive electrode plate, the separator, and the negative electrode plate were wound in sequence to form an electrode assembly, the electrode assembly was placed into an outer packaging foil, and the electrolyte was injected into the outer packaging foil to infiltrate the electrode assembly, followed by processes such as packaging, formation, and shaping to obtain a lithium-ion secondary battery.

### Example 2 to Example 6

Preparation methods were similar to the preparation method in Example 1 except that some parameters of the positive electrode plate were different, specifically as shown in Table 1.

### Comparative example 1 to Comparative example 4

Preparation methods were similar to the preparation method in example 1 except that some parameters of the positive electrode plate were different, specifically as shown in Table 1.

### Example 7 to Example 13

Preparation methods were similar to the preparation method in Example 3 except that some parameters of the positive electrode plate were different, specifically as shown in Table 2.

### Example 14

Preparation methods were similar to the preparation method in Example 3 except that some parameters of the positive electrode plate were different, specifically as shown in Table 3.

### Example 15 to Example 18

Preparation methods were similar to the preparation method in Example 3 except that some parameters of the positive electrode plate were different, specifically as shown in Table 4.

### Example 19 to Example 22

Preparation methods were similar to the preparation method in Example 3 except that some parameters of the positive electrode plate were different, specifically as shown in Table 5.

### Tests

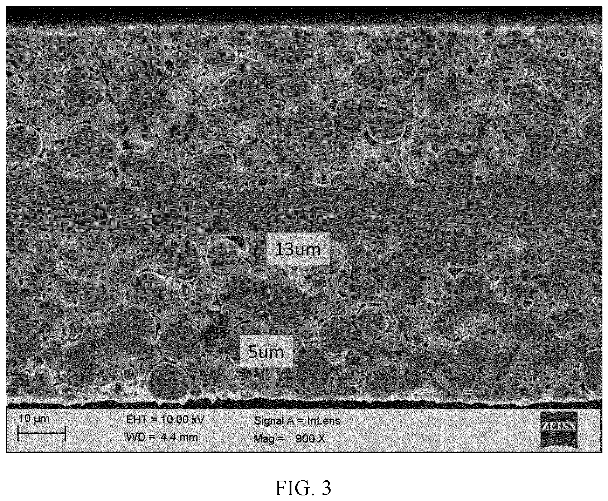

1. Test for total sectional area S₀ of secondary particles, sectional area S₁ of positive electrode active material layer, and particle size by number D₀ of secondary particles
   (1) A dried positive electrode plate was cut with a knife to obtain a sample with a width of 10 mm and a length of 10 mm, and the sample was fixed to a SEM test bench.
   (2) The positive electrode plate was plated with Pt.
   (3) The processed sample was subjected to a CP slicing treatment.
   (4) A SEM test device was started, the CP-sliced sample was placed in the SEM test device, and N₂ vacuumizing was performed.
   (5) Measurement was started, a 0.1 cm×0.05 cm observation range was taken as a test region (that is, a sectional area S₁ of the positive electrode active material layer), and a diameter of secondary particles was measured and recorded as D₀.
   (6) A corresponding sectional area S₀ of the secondary particles was calculated based on D₀.
   Reference can be made to the SEM image shown in FIG. 3.
2. Measurement of length L and diameter D₁ of carbon nanotubes
   Known instruments and methods in the art may be used for the measurement. For example, a ZEISS SEM (sigma-02-33) scanning electron microscope was used for testing. The electrode plate was subjected to a SEM test. Within a 50 µm*50 µm area, lengths and diameters of 50 carbon nanotubes were measured and respectively averaged to obtain L and D₁.
3. Dᵥ50 and Dᵥ10 test for positive electrode active material
   (1) Start of device: Firstly, a sample introduction system of a laser diffraction/scattering particle size analyzer (Master Sizer 3000) was started, then an optical system and a computer were started, and the device was preheated for 30 min.
   (2) Sample introduction system cleaning: A sample introduction vessel was filled with water, a rotating speed was adjusted to a maximum value, cleaning was performed for 5 s, then the rotating speed was adjusted to 0, and cleaning was repeated 3 times to ensure cleanliness of the sample introduction vessel.
   (3) A "Manual Measurement" interface was displayed, and material names, refractive indexes, material types, measurement time, and number of measurements were set sequentially.
   (4) Light focusing and background light measurement for an electrode were performed by clicking "Start".
   (5) A positive electrode active material was dispersed in a water solution (10 mL) to prepare a sample; the sample was added into the sample introduction vessel, where opacity increased as the sample was added; when the opacity increased to 8% to 12%, sample introduction was stopped; after the opacity was kept stable (generally, there was no fluctuation after 30 seconds), "Start" was clicked to start particle size test; and Dᵥ50 and Dᵥ 10 were obtained at the end of the test.
   (6) Three parallel samples needed to be tested for calculating average values of Dᵥ50 and Dᵥ 10.
4. Measurement of weight-average molecular weight Mw and number-average molecular weight Mn of binder
   Molecular weight and molecular weight distribution were tested with reference to GB/T 21863-2008 gel permeation chromatography using an ultra-high performance polymer chromatograph: ACQUITY APC, as well as a detector: ACQUITY differential refractive detector. Test steps were as follows:
   (1) Start and preheating of device: A chromatographic column and a pipeline were mounted; a console, a test power supply, and the like were turned on in sequence; and test software Empower was started.
   (2) Parameter settings: Volume of the sample: 0 µL to 50 µL (depending on sample concentration); pumping flow velocity: 0.2 mL/min; mobile phase: an NMP solution with 30 mol/L LiBr; seal wash solution: isopropanol; pre-column: PL gel 10 µm MiniMIX-B Guard (size: 50 mm×4.6 mm×2); analytical column: PL gel 10 µm MiniMIX-B (size: 250 mm×4.6 mm); standard: polystyrene kit; run time: 30 min; detector: ACQUITY differential refractive index (RI) detector; column oven temperature: 90°C; and detector temperature: 55°C.
   (3) Sample test: a. Preparation of standard and test samples: 0.002 g to 0.004 g of a standard/test sample was weighed and added into 2 mL of a mobile phase liquid to prepare a 0.1% to 0.5% mixed standard; and the mixed standard was placed in the refrigerator for more than 8 h. b. Standard solution/sample test: A test sample group was edited, an established sample group method was selected, and after a baseline was stable, "Run Queue" was clicked to start to test the sample.
   (4) Data processing: A calibration curve was established according to a relationship between a retention time and the molecular weight in a chemical workstation; a sample spectrum was quantitatively integrated; and molecular weight and molecular weight distribution results were automatically generated in the chemical workstation.
5. Capacity retention rate test
   In a test environment at 45°C, a lithium-ion battery after formation was charged to a cut-off voltage of 4.5 V at a current of 1.3C in a constant-current charging stage and subsequently constant-voltage charged to a cut-off current of 0.05C, and then charging was ended; after fully charged, the battery was left standing for 5 min and then discharged to 3.0 V at a current of 1.0 C, and this was a charge and discharge cycle; and after such charge and discharge cycle was repeated 500 times, a discharge capacity at the 500^{th} cycle was divided by a discharge capacity at the first cycle to obtain the cycling capacity retention rate.
6. Thickness swelling test for lithium-ion secondary battery
   The thickness of the lithium-ion secondary battery was measured using a PPG plate thickness gauge, where thickness swelling rate of lithium-ion secondary battery=(thickness after full charge after cycling-thickness after first full charge)/thickness after first charge×100%.
7. Measurement of solid content
   8 g to 12 g of a sample slurry was placed in a vessel and was weighed using a scale to obtain a weight recorded as m1; subsequently, the vessel containing the slurry was placed in an oven at 120°C for 6 h until the weight of the sample was not reduced; and then the sample was taken out and weighed again to obtain a weight m2, where the solid content=m2/m1.
8. Oxidation reduction potential test
   Typically, a cycling voltage-current curve of an assembled button or soft-pack lithium-ion battery is directly tested in an electrochemical workstation. Firstly, a green clamp of the electrochemical workstation clamped one side of a working electrode of the assembled battery, a red clamp (for a counter electrode) and a white clamp (for a reference electrode) clamped the other electrode of the battery, and then parameters were set using a cycling voltage-current test function. In this case, a selectable voltage range was 3 V to 5 V, and a scanning rate was 0.1 mV/s.

Table 1 lists different parameters and test results of Examples 1 to 6 and Comparative examples 1 to 4.

**Table 1**

| No. | η₁ (%) | η₂ (%) | η₃ (%) | S₀ (cm²) | S₁ (cm²) | S₀/S₁ | R (mΩ) | Capacity retention rate at 45°C | Swelling rate at 45°C |
|---|---|---|---|---|---|---|---|---|---|
| Example 1 | 0.4 | 0.4 | 0.2 | 0.00005 | 0.005 | 0.01 | 196 | 73.2% | 12.7% |
| Example 2 | 0.4 | 0.41 | 0.19 | 0.00015 | 0.005 | 0.03 | 208 | 72.7% | 11.8% |
| Example 3 | 0.45 | 0.45 | 0.1 | 0.0002 | 0.005 | 0.04 | 168 | 80.5% | 5.3% |
| Example 4 | 0.5 | 0.36 | 0.14 | 0.00025 | 0.005 | 0.05 | 187 | 75.3% | 10.2% |
| Example 5 | 0.35 | 0.5 | 0.15 | 0.0004 | 0.005 | 0.08 | 235 | 77.9% | 7.9% |
| Example 6 | 0.5 | 0.3 | 0.2 | 0.0005 | 0.005 | 0.1 | 425 | 70.2% | 13.5% |
| Comparative example 1 | 0.57 | 0.3 | 0.13 | 0.00065 | 0.005 | 0.13 | 458 | 62.1% | 17.6% |
| Comparative example 2 | 0.33 | 0.55 | 0.12 | 0.00045 | 0.005 | 0.09 | 336 | 67.5% | 14.5% |
| Comparative example 3 | 0.2 | 0.45 | 0.35 | 0.0003 | 0.005 | 0.06 | 299 | 68.3% | 14.3% |
| Comparative example 4 | 0.57 | 0.18 | 0.25 | 0.0006 | 0.005 | 0.12 | 387 | 66.8% | 14.3% |

As shown in Table 1, it can be learned from comparison between the test results of Examples 1-6 and Comparative examples 1-4 that when the total sectional area S₀ of the secondary particles and the sectional area S₁ of the positive electrode active material layer satisfy 0<S₀/S₁≤0.1, the diameter D₀ of the secondary particles satisfies 0 µm<D₀≤18 µm, and the percentage by number of the secondary particles with the diameter D₀ within each range in the secondary particles further satisfies: when 0 µm<D₀≤3 µm, 30%≤η₁≤50%; when 3 µm<D₀≤10 µm, 30%≤η₂≤50%; and when 10 µm<D₀≤18 µm, 0%≤η₃≤20%, the electrochemical apparatus has good cycling performance in high-temperature environments and therefore has a long service life.

Table 2 lists the test results obtained when the positive electrode active materials in Example 3 and Examples 7-13 have different Dᵥ10/Dᵥ50 ratios and number densities.

**Table 2**

| No. | Dᵥ10 (µm) | Dᵥ50 (µm) | Dᵥ10/Dᵥ50 | ρ (/cm²) | R (mΩ) | Capacity retention rate at 45°C | Swelling rate at 45°C |
|---|---|---|---|---|---|---|---|
| Example 7 | 1.5 | 12.0 | 0.13 | 17600 | 245 | 72.8% | 12.10% |
| Example 8 | 2.0 | 12.0 | 0.15 | 16800 | 211 | 73.10% | 10.79% |
| Example 9 | 4.5 | 12.0 | 0.38 | 17800 | 182 | 77.50% | 8.10% |
| Example 10 | 7.0 | 11.8 | 0.59 | 18400 | 172 | 80.10% | 5.90% |
| Example 3 | 6.1 | 9.6 | 0.64 | 19000 | 168 | 80.50% | 5.30% |
| Example 11 | 6.1 | 7.8 | 0.78 | 16600 | 234 | 78.40% | 7.90% |
| Example 12 | 6.1 | 6.8 | 0.90 | 15800 | 289 | 75.60% | 11.50% |
| Example 13 | 6.1 | 6.5 | 0.94 | 15000 | 302 | 70.10% | 12.10% |

As shown in Table 2, the ratio of Dᵥ10 and Dᵥ50 of the positive electrode active material layer is within an appropriate range, not only allowing positive electrode active material particles with a small particle size to fill gaps of positive electrode active material particles with a large particle size so as to enhance contact between active particles of the positive electrode active material but also allowing the positive electrode active materials to be uniformly distributed so that their agglomeration is reduced, thereby helping to reduce the resistance of the positive electrode plate and reduce the swelling rate of the electrochemical apparatus, such that the electrochemical apparatus has good high-temperature cycling performance.

Table 3 lists the test results obtained when the positive electrode active materials in Examples 3, 6, and 14 have different nickel content, that is, different number densities.

**Table 3**

| No. | Type of positive electrode active material | ρ(/cm²) | R (mΩ) | Capacity retention rate at 45°C | Swelling rate at 45°C |
|---|---|---|---|---|---|
| Example 3 | NCM811 | 19000 | 168 | 80.50% | 5.30% |
| Example 6 | NCM613 | 15600 | 295 | 78.40% | 6.10% |
| Example 14 | NCM523 | 16400 | 330 | 79.30% | 5.80% |

It can be learned from Table 3 that the percentage of the number of moles of nickel to the total number of moles of nickel, cobalt, and manganese in the positive electrode active material layer is within an appropriate range, and the number density ρ of the secondary particles is within an appropriate range. Therefore, a high nickel content can improve the conductivity of the positive electrode plate, and the conductive agent containing the secondary particles can effectively inhibit formation of gel in the positive electrode slurry, thereby further helping to reduce the resistance of the positive electrode plate and the swelling rate of the electrochemical apparatus, so that the electrochemical apparatus has good high-temperature cycling performance.

Table 4 lists different binders and test results of Example 3 and Examples 15-18.

**Table 4**

| No. | Binder | | | | | | | | Capacity retention rate at 45°C | Swelling rate at 45°C |
|---|---|---|---|---|---|---|---|---|---|---|
| | Name | Mw | Mw/Mn | VDF | TFE | HFP | -COOH | PVP | | |
| Example 3 | Y1 | 110w | 2.3 | √ | √ | √ | × | √ | 80.5% | 5.3% |
| Example 15 | Y2 | 110w | 2.3 | √ | √ | √ | × | × | 79.3% | 5.5% |
| Example 16 | Y3 | 110w | 2.3 | √ | √ | × | × | × | 60.5% | 15.3% |
| Example 17 | Y4 | 110w | 2.3 | √ | × | √ | × | × | 61.5% | 14.2% |
| Example 18 | Y5 | 105w | 2.1 | √ | × | × | √ | × | 63.5% | 14.3% |

It can be learned from Table 4 that the binder in the positive electrode active material layer includes various structural units and is capable of effectively inhibiting formation of gel and reducing agglomeration of the secondary particles, thereby facilitating improvement of the cycling performance of the lithium-ion secondary battery in high-temperature environments.

Table 5 lists the test results of Example 3 and Examples 19-22 when the carbon nanotubes have different lengths, diameters, and length-to-diameter ratios.

**Table 5**

| No. | Carbon nanotubes | | | | Solid content (%) | Oxidati on reducti on potenti al (V) | Capacity retention rate (500 cycles, 45°C) | Swelling rate (500 cycles, 45°C) |
|---|---|---|---|---|---|---|---|---|
| | Name | L | D₁ | L/D₁ | | | | |
| Example 3 | CNT-1 | 4.0 | 19.5 | 205 | 5 | 4.55 | 80.5% | 5.3% |
| Example 19 | CNT-2 | 3.0 | 10.0 | 300 | 5 | 4.55 | 79.1% | 6.6% |
| Example 20 | CNT-3 | 1.5 | 15.0 | 100 | 5 | 4.55 | 73.5% | 9.3% |
| Example 21 | CNT-4 | 1.2 | 24.0 | 50 | 6 | 4.5 | 71.5% | 11.2% |
| Example 22 | CNT-5 | 0.7 | 35.0 | 20 | 6 | 4.5 | 69.5% | 12.3% |

It can be learned from Table 5 that an appropriate length-to-diameter ratio of the carbon nanotubes facilitates formation of a conductive network structure in the positive electrode active material, thereby improving the electron conduction capability of the positive electrode plate and also reducing agglomeration of the positive electrode active material. In addition, an appropriate length-to-diameter ratio of the carbon nanotubes can allow the electrochemical apparatus to have a relatively high oxidization reduction potential, reducing occurrence of side reaction in the electrolyte, thereby allowing the electrochemical apparatus to have good electrochemical stability. Therefore, an appropriate length-to-diameter ratio of the carbon nanotubes can further allow the electrochemical apparatus to have good cycling performance and electrochemical stability in high-temperature environments.

This application is not limited to the specific embodiments disclosed in this specification but includes all technical solutions falling within the scope of the claims.

## Claims

1. An electrochemical apparatus, comprising: a positive electrode plate, wherein the positive electrode plate comprises a positive electrode current collector and a positive electrode active material layer disposed on a surface of the positive electrode current collector, and the positive electrode active material layer comprises a positive electrode active material and a conductive agent, the conductive agent containing secondary particles;
wherein a total sectional area S₀ of the secondary particles and a sectional area S₁ of the positive electrode active material layer satisfy 0<S₀/S₁≤0.1;
a diameter D₀ of the secondary particles satisfies 0 µm<D₀≤18 µm;
wherein a percentage η₁ of the secondary particles having the diameter D₀ satisfying 0 µm<D₀≤3 µm in the secondary particles satisfies 30%≤η₁≤50%;
a percentage η₂ of the secondary particles having the diameter D₀ satisfying 3 µm<D₀≤10 µm in the secondary particles satisfies 30%≤η₂≤50%; and
a percentage η₃ of the secondary particles having the diameter D₀ satisfying 10 µm<D₀≤18 µm in the secondary particles satisfies 0%≤η₃≤20%.

2. The electrochemical apparatus according to claim 1, wherein 0.04≤S₀/S₁≤0.08.

3. The electrochemical apparatus according to claim 1 or 2, wherein a particle size distribution of the positive electrode active material satisfies 0.15≤Dᵥ10/Dᵥ50≤0.9.

4. The electrochemical apparatus according to claim 1 or 2, wherein a particle size distribution of the positive electrode active material satisfies 0.38≤Dᵥ10/Dᵥ50≤0.78.

5. The electrochemical apparatus according to claim 1 or 2, wherein a particle size distribution of the positive electrode active material satisfies 0.59≤Dᵥ10/Dᵥ50≤0.64.

6. The electrochemical apparatus according to claim 1, wherein the positive electrode active material comprises a nickel-cobalt-manganese ternary material.

7. The electrochemical apparatus according to claim 6, wherein a percentage of the number of moles of nickel to a total number of moles of nickel, cobalt, and manganese in the nickel-cobalt-manganese ternary material is greater than or equal to 60%.

8. The electrochemical apparatus according to claim 1, wherein in a section along a thickness direction of the positive electrode active material layer, a number density ρ of the secondary particles per unit area satisfies p≤20,000/cm².

9. The electrochemical apparatus according to claim 1, wherein each secondary particle is formed by agglomeration of a plurality of primary particles, wherein the primary particles comprise at least one of granular conductive carbon or carbon nanotubes.

10. The electrochemical apparatus according to claim 9, wherein the primary particles comprise the carbon nanotubes;
a length L of the carbon nanotubes satisfies 0.1 µm≤L≤6 µm;
a diameter D₁ of the carbon nanotubes satisfies 4 nm≤D₁≤20 nm; and
a length-to-diameter ratio UD₁ of the carbon nanotubes satisfies 100≤L/D₁≤300.

11. The electrochemical apparatus according to claim 10, wherein 1.5 µm≤L≤5 µm.

12. The electrochemical apparatus according to claim 11, wherein 200≤L/D₁≤300.

13. The electrochemical apparatus according to claim 9 or 10, wherein the positive electrode active material layer further comprises a binder, and the binder satisfies at least one of the following characteristics:
(I) the binder has a corresponding Fourier transform infrared spectrum characteristic peak: 1654 cm⁻¹;
(II) a weight-average molecular weight Mw of the binder satisfies: 900,000≤Mw≤1,200,000;
(III) the weight-average molecular weight Mw and a number-average molecular weight Mn of the binder satisfy: 1.8≤Mw/Mn≤2.4;

14. The electrochemical apparatus according to claim 13, wherein the binder has a molecular formula (A):
(VDF)m(TFE)n(HFP)r(PVP)x (A)
wherein in the formula (A), VDF represents vinylidene fluoride, which is a structural unit of Polyvinylidene fluoride; TFE represents tetrafluoroethylene, which is a structural unit of Ploytetrafluoroethylene; HFP represents hexafluoropropylene, which is a structural unit of Ployhexafluoropropylene; PVP represents vinylpyrrolidone, which is a structural unit of polyvinyl pyrrolidone; 0.35≤m≤1; 0≤n≤0.4; 0≤r≤0.2; 0≤x≤0.2; and m+n+r+x=1.

15. An electronic apparatus, comprising the electrochemical apparatus according to any one of claims 1 to 14.

## Patentansprüche

1. Elektrochemische Vorrichtung, umfassend: eine positive Elektrodenplatte, wobei die positive Elektrodenplatte einen positiven Elektrodenstromkollektor und eine Aktivmaterialschicht der positiven Elektrode umfasst, die auf einer Oberfläche des positiven Elektrodenstromkollektors angeordnet ist, und die Aktivmaterialschicht der positiven Elektrode ein Aktivmaterial der positiven Elektrode und ein leitfähiges Mittel umfasst, wobei das leitfähige Mittel Sekundärpartikel enthält;
wobei eine Gesamtquerschnittsfläche S₀ der Sekundärpartikel und eine Querschnittsfläche S₁ der Aktivmaterialschicht der positiven Elektrode 0<S₀/S₁≤0,1 erfüllen;
ein Durchmesser D₀ der Sekundärpartikel 0 µm<D₀≤18 µm erfüllt;
wobei ein Prozentsatz η₁ der Sekundärpartikel, bei denen der Durchmesser D₀ 0 µm<D₀≤3 µm erfüllt, in den Sekundärpartikeln 30 %≤η₁≤50 % erfüllt;
ein Prozentsatz η₂ der Sekundärpartikel, bei denen der Durchmesser D₀ 3 µm<D₀≤10 µm erfüllt, in den Sekundärpartikeln 30 %≤η₂≤50 % erfüllt; und
ein Prozentsatz η₃ der Sekundärpartikel, bei denen der Durchmesser D₀ 10 µm<D₀≤18 µm erfüllt, in den Sekundärpartikeln 0 %≤η₃≤20 % erfüllt.

2. Elektrochemische Vorrichtung nach Anspruch 1, wobei 0,04≤S₀/S₁≤0,08.

3. Elektrochemische Vorrichtung nach Anspruch 1 oder 2, wobei eine Partikelgrößenverteilung des Aktivmaterials der positiven Elektrode 0,15≤Dᵥ10/Dᵥ50≤0,9 erfüllt.

4. Elektrochemische Vorrichtung nach Anspruch 1 oder 2, wobei eine Partikelgrößenverteilung des Aktivmaterials der positiven Elektrode 0,38≤Dᵥ10/Dᵥ50≤0,78 erfüllt.

5. Elektrochemische Vorrichtung nach Anspruch 1 oder 2, wobei eine Partikelgrößenverteilung des Aktivmaterials der positiven Elektrode 0,59≤Dᵥ10/Dᵥ50≤0,64 erfüllt.

6. Elektrochemische Vorrichtung nach Anspruch 1, wobei das Aktivmaterial der positiven Elektrode ein ternäres Nickel-Kobalt-Mangan-Material umfasst.

7. Elektrochemische Vorrichtung nach Anspruch 6, wobei ein Prozentsatz der Molzahl von Nickel zu einer Gesamtmolzahl von Nickel, Kobalt und Mangan in dem ternären Nickel-Kobalt-Mangan-Material größer als oder gleich 60 % ist.

8. Elektrochemische Vorrichtung nach Anspruch 1, wobei in einem Abschnitt entlang einer Dickenrichtung der Aktivmaterialschicht der positiven Elektrode eine Anzahldichte ρ der Sekundärpartikel pro Flächeneinheit ρ≤20.000/cm² erfüllt.

9. Elektrochemische Vorrichtung nach Anspruch 1, wobei jedes Sekundärpartikel durch Agglomeration einer Vielzahl von Primärpartikeln gebildet wird, wobei die Primärpartikel mindestens eines von granulärem leitfähigem Kohlenstoff oder Kohlenstoff-Nanoröhrchen umfassen.

10. Elektrochemische Vorrichtung nach Anspruch 9, wobei die Primärpartikel die Kohlenstoff-Nanoröhrchen umfassen;
eine Länge L der Kohlenstoff-Nanoröhrchen 0,1 µm≤ L ≤6 µm erfüllt;
ein Durchmesser D₁ der Kohlenstoff-Nanoröhrchen 4 nm≤ D₁ ≤20 nm erfüllt; und
ein Längen-Durchmesser-Verhältnis L/D₁ der Kohlenstoff-Nanoröhrchen 100≤ L/D₁ ≤300 erfüllt.

11. Elektrochemische Vorrichtung nach Anspruch 10, wobei 1,5 µm≤ L ≤5 µm.

12. Elektrochemische Vorrichtung nach Anspruch 11, wobei 200≤ L/D1 ≤300.

13. Elektrochemische Vorrichtung nach Anspruch 9 oder 10, wobei die Aktivmaterialschicht der positiven Elektrode weiter ein Bindemittel umfasst und das Bindemittel mindestens eines der folgenden Merkmale erfüllt:
(I) das Bindemittel weist einen entsprechenden charakteristischen Peak im Fourier-Transformations-Infrarotspektrum auf: 1654 cm⁻¹;
(II) ein gewichtsmittleres Molekulargewicht Mw des Bindemittels erfüllt Folgendes: 900.000≤ Mw ≤1.200.000;
(III) das gewichtsmittlere Molekulargewicht Mw und ein zahlenmittleress Molekulargewicht Mn des Bindemittels erfüllen Folgendes: 1,8≤ Mw/Mn ≤2,4;

14. Elektrochemische Vorrichtung nach Anspruch 13, wobei das Bindemittel eine Molekularformel (A) aufweist:
(VDF)m(TFE)n(HFP)r(PVP)x (A)
wobei in der Formel (A) VDF für Vinylidenfluorid steht, das eine Struktureinheit von Polyvinylidenfluorid ist; TFE für Tetrafluorethylen steht, das eine Struktureinheit von Polytetrafluorethylen ist; HFP für Hexafluorpropylen steht, das eine Struktureinheit von Polyhexafluorpropylen ist; PVP für Vinylpyrrolidon steht, das eine Struktureinheit von Polyvinylpyrrolidon ist; 0,35 ≤m ≤1; 0 ≤n≤ 0,4; 0 ≤r≤ 0,2; 0≤ x ≤0,2; und m+n+r+x=1.

15. Elektronische Vorrichtung, die die elektrochemische Vorrichtung nach einem der Ansprüche 1 bis 14 umfasst.

## Revendications

1. Appareil électrochimique, comprenant : une plaque d'électrode positive, dans laquelle la plaque d'électrode positive comprend un collecteur de courant d'électrode positive et une couche de matériau actif d'électrode positive disposée sur une surface du collecteur de courant d'électrode positive, et la couche de matériau actif d'électrode positive comprend un matériau actif d'électrode positive et un agent conducteur, l'agent conducteur contenant des particules secondaires ; dans laquelle une aire de section totale S₀ des particules secondaires et une aire de section S₁ de la couche de matériau actif d'électrode positive satisfont 0<S₀/S₁≤0.1;
un diamètre D₀ des particules secondaires satisfait 0 µm<D₀≤18 µm ;
dans lequel un pourcentage η₁ des particules secondaires ayant le diamètre D₀ satisfaisant 0 µm<D₀≤3 µm dans les particules secondaires satisfait 30%≤η₁≤50%;
un pourcentage η₂ des particules secondaires ayant le diamètre D₀ satisfaisant 3 µm<D₀≤10 µm dans les particules secondaires satisfait 30%≤η₂≤50% ; et
un pourcentage η₃ des particules secondaires ayant le diamètre D₀ satisfaisant 10 µm<D₀≤18 µm dans les particules secondaires satisfait 0%≤η₃≤20%.

2. Appareil électrochimique selon la revendication 1, dans lequel 0.04≤S₀/S₁≤0.08.

3. Appareil électrochimique selon la revendication 1 ou 2, dans lequel une distribution granulométrique du matériau actif d'électrode positive satisfait 0.15≤Dᵥ10/Dᵥ50≤0.9

4. Appareil électrochimique selon la revendication 1 ou 2, dans lequel une distribution granulométrique du matériau actif d'électrode positive satisfait 0.38≤Dᵥ10/Dᵥ50≤0.78.

5. Appareil électrochimique selon la revendication 1 ou 2, dans lequel une distribution granulométrique du matériau actif d'électrode positive satisfait 0.59≤Dᵥ10/Dᵥ50≤0.64.

6. Appareil électrochimique selon la revendication 1, dans lequel le matériau actif d'électrode positive comprend un matériau ternaire nickel-cobalt-manganèse

7. Appareil électrochimique selon la revendication 6, dans lequel un pourcentage du nombre de moles de nickel par rapport au nombre total de moles de nickel, de cobalt et de manganèse dans le matériau ternaire nickel-cobalt-manganèse est supérieur ou égal à 60 %.

8. Appareil électrochimique selon la revendication 1, dans lequel dans une section le long d'une direction d'épaisseur de la couche de matériau actif d'électrode positive, une densité numérique ρ des particules secondaires par unité de surface satisfait p≤20,000/cm².

9. Appareil électrochimique selon la revendication 1, dans lequel chaque particule secondaire est formée par agglomération d'une pluralité de particules primaires, les particules primaires comprenant au moins un élément parmi du carbone conducteur granulaire ou des nanotubes de carbone.

10. Appareil électrochimique selon la revendication 9, dans lequel les particules primaires comprennent les nanotubes de carbone ;
une longueur L des nanotubes de carbone satisfait 0,1 µm≤L≤6 µm ;
un diamètre D₁ des nanotubes de carbone satisfait 4 nm≤D₁≤20 nm ; et
un rapport longueur/diamètre L/D₁ des nanotubes de carbone satisfait 100≤L/D₁≤300.

11. Appareil électrochimique selon la revendication 10, dans lequel 1,5 µm ≤L≤ 5 µm.

12. Appareil électrochimique selon la revendication 11, dans lequel 200≤L/D₁≤300.

13. Appareil électrochimique selon la revendication 9 ou 10, dans lequel la couche de matériau actif d'électrode positive comprend en outre un liant, et le liant satisfait au moins l'une des caractéristiques suivantes :
(I) le liant a un pic caractéristique de spectre infrarouge à transformée de Fourier correspondant : 1654 cm⁻¹;
(II) un poids moléculaire moyen en poids Mw du liant satisfait : 900 000≤Mw≤1 200 000 ;
(III) la masse moléculaire moyenne en poids Mw et la masse moléculaire moyenne en nombre Mn du liant satisfont : 1,8 ≤ Mw/Mn ≤ 2,4 ;

14. Appareil électrochimique selon la revendication 13, dans lequel le liant a une formule moléculaire (A) :
(VDF)m(TFE)n(HFP)r(PVP)x (A)
dans laquelle dans la formule (A), VDF représente le fluorure de vinylidène, qui est une unité structurelle du polyfluorure de vinylidène ; TFE représente le tétrafluoroéthylène, qui est une unité structurelle du polytétrafluoroéthylène ; HFP représente l'hexafluoropropylène, qui est une unité structurelle du polyhexafluoropropylène ; PVP représente la vinylpyrrolidone, qui est une unité structurelle de la polyvinylpyrrolidone ; 0,35≤m≤1 ; 0≤n≤0,4 ; 0≤r≤0,2 ; 0≤x≤0,2 ; et m+n+r+x=1.

15. Appareil électronique, comprenant l'appareil électrochimique selon l'une quelconque des revendications 1 à 14.
